# EUROPEAN PATENT APPLICATION

(11) **EP 2 735 754 A1**
(43) Date of publication of application: **28.05.2014**
(21) Application number: 11869749.9
(22) Date of filing: 20.07.2011
(51) Int. Cl.: F16D 13/60, F16D 25/10

(54) **TRANSMISSION**

(71) Applicant: Aisin AI Co., Ltd., Nishio-shi, Aichi 445-0006 (JP); Aisin Seiki Kabushiki Kaisha, Aichi 448-8650 (JP)
(72) Inventor: OGAMI Shiro, Nishio-shi Aichi 445-0006 (JP); NAGASAKA, Hiroyuki, Aichi 4488650 (JP); KUMIKAWA, Yuki, Aichi 4488650 (JP); SOGA, Yoshitaka, Aichi 4488650 (JP)
(74) Representative: Kuhnen & Wacker
(86) International application number: PCT/JP2011/066429
(87) International publication number: WO 2013/011575

(57) **Abstract**

A transmission having a clutch device reduces a torque loss from the engine caused by a friction force by reducing the workload of a synchronizer ring. The transmission includes a damper provided between the rotation member and the clutch cover or between the clutch cover and a center plate for absorbing the engine rotation fluctuation and a pushing device for pushing the clutch disc having a reduced diameter with an increased pushing force more than the pushing force set based on the clutch disc having a diameter before reducing.

## Description

### TECHNICAL FIELD

This invention relates to a transmission and more particularly to a transmission in which shifting of speed stage and operation of clutch are automatically performed using a manual gear transmission.

### BACKGROUND OF THE TECHNOLOGY

Conventionally, as an automated transmission for a vehicle having a drive source as an engine (internal combustion engine), an AMT (automated manual transmission) has been known which is formed by providing an actuator to an existing manual gear transmission so that the a series of speed change operation (clutch engagement disengagement operation, gear shifting and selecting operations) can be automatically performed in response to an intension of the operator of the vehicle or a vehicle running state. Further, recently, a DCT (dual clutch transmission) has been proposed in which a pair of clutches and a pair of input shafts is provided to be able to perform the speed change operation more smoothly. (Patent Document 1)

As a speed change operation method for such automatic transmission, most of the existing transmissions adapt the synchronizing engagement method. Under this synchronizing engagement method, for example, a gear wheel is fixed to the input shaft for unitary rotation therewith and a plurality of gear wheels is formed on the output shaft for relative rotation with the output shaft by pairing with the gear wheel of the input shaft in each speed stage. The plurality of gear wheels of the output shaft is always in engagement with the gear wheel of the input shaft. When a speed stage is changed by each paired gear wheel forming corresponding speed stage, the synchronizing mechanism provided between the gear wheels of a desired speed stage supported on the output shaft and the output shaft to synchronize the two for rotation connection. Thus the input shaft and the output shaft are smoothly connected for rotation through the desired paired gear wheel to perform speed change operation..

### DOCUMENT LIST OF STATE OF ART

### PATENT DOCUMENT

Patent Document 1: Tokuhyo2007-534899 A

### DISCLOSURE OF INVENTION

### PROBLEMS TO BE SOLVED

However, according to the transmission disclosed in the above Patent Document 1, it is necessary to connect the input and output shafts smoothly and quickly in order to satisfy the feeling requirement by the operator of the vehicle upon speed change operation. To satisfy such requirement by the operator, the synchronizing mechanism is structured to have a large friction surface to increase the friction force (workload) so that the gear wheel is connected to the output shaft by effectively absorbing the inertial force generated at the clutch disc of the clutch. However, when increasing the friction surface, an excess friction force may be generated at the synchronizing mechanism to lead to a generation of torque loss and the engine efficiency may be worsened thereby.

The present invention was made in consideration with the above problems and the object of the invention is to provide a transmission which is provided with a clutch device that can reduce the torque loss caused by friction, by reducing the amount of work at the synchronizing mechanism satisfying the feeling required by the operator of the vehicle upon speed change operation.

### MEANS FOR SOLVING THE PROBLEM

The transmission associated with the invention is proposed to solve the above problems and is characterized in that the transmission comprises a case, an input shaft and an output shaft which are supported in the case in an axial direction, a clutch device for engaging the engine with or disengaging the engine from the input shaft, the clutch device including a clutch cover rotatably connected to a rotation member which is rotated by an engine and rotated by the rotation member, a clutch disc supported on the input shaft and a rotational movement thereof being restricted, but an axial movement thereof relative to the input shaft being allowed, a pressure plate supported on the clutch disc and a rotational movement thereof being restricted but an axial movement thereof relative to the input shaft being allowed for pressing upon the clutch disc, a center plate provided at the clutch cover and a pushing device pushing the pressure plate to squeeze the clutch disc together with the center plate, a damper provided between the rotation member and the clutch cover or between the clutch cover and the center plate for absorbing an engine rotation fluctuation and a plurality of paired gear wheels wherein one of the paired gear wheels of the plurality of paired gear wheels mutually engaged is fixed to one of the input and output shafts and the other of the paired gear wheels of the plurality of paired gear wheels mutually engaged is rotatably connected to the other of the input and output shafts and wherein the other of the input and output shafts is rotatably connected by a synchronizer ring of a shift clutch, wherein a pushing pressure by the pushing device for pushing the clutch disc which diameter is reduced is set to be greater than a pushing pressure based on the clutch disc having a diameter before the clutch disc is reduced.

In order to solve the problems above, the transmission according to claim 2 is characterized in that in claim 1, the magnitude of the pushing pressure to be increased is in the range from +3 to +40% set based on the diameter of the clutch disc before the diameter thereof is reduced.

In order to solve the problems above, the transmission according to claim 3 is characterized in that in claim 1 or 2, a thickness of at least one of the members of the pressure plate and the center plate is set so that a volume of the one member is increased more than a volume of the one member set based on a drive torque of the engine to be transmitted to the input shaft and the diameter of the clutch disc before the diameter thereof is reduced.

In order to solve the problems above, the transmission according to claim 4 is characterized in that in any one of claims 1 through 3, a reduction gear ratio of one of the paired gear wheels which is the lowest speed stage among the plurality of paired gear wheels is set to be increased more than a gear reduction ratio of the pairing gear wheels of the first speed stage which is set in response to the drive torque of the engine to be transmitted to the input shaft and the diameter of the clutch disc before the diameter thereof is reduced.

In order to solve the problems above, the transmission according to claim 5 is characterized in that in any one of claims 1 through 4, the input shaft includes a first input shaft and a second input shaft coaxially and rotatably supported on the case, the output shaft includes a first output shaft and a second output shaft rotatably supported on the case in parallel with the first input shaft and the second input shaft, respectively, the one of the gear wheels at each drive side among the plurality of paired gear wheels is fixed to the first and the second input shafts and the other of the paired gear wheels at each driven side among the plurality of the paired gear wheels is supported on the first and the second output shafts, the pressure plate of the clutch device includes a first pressure plate and a second pressure plate and the clutch disc includes a first clutch disc held between the first pressure plate and the center plate and a second clutch disc held between the second pressure plate and the center plate.

### EFFECTS OF THE INVENTION

According to the invention associated with claim 1, the damper is provided between the rotation-member and the clutch cover or between the clutch cover and the center plate and accordingly, there would be no need to have the damper provided within the inner diametrical portion of the clutch disc which leads to decreasing of the diameter of the clutch disc. The decrease of transmitting amount of the engine drive torque to the input shaft caused by the decreasing of the diameter of the clutch disc can be compensated for by increasing the pushing pressure by the pushing device relative to the pushing pressure to be set according to the diameter of the clutch disc before decreasing thereof. Thus, the diameter of the clutch disc can be decreased and the weight of the clutch disc can be decreased to reduce the rotation inertia force. Accordingly, the workload by the synchronizing ring can be reduced to improve the efficiency of engine and eventually the weight of the transmission as a whole can be reduced.

According to the invention associated with claim 2, in claim 1 the increasing amount of the pushing pressure is set to the range between +3 and +40 %. Therefore, a normal pushing device can be used as it is, to keep the cost not to be raised.

According to the invention associated with claim 3, in claim 1 or 2, the thickness of at least one of the members of the pressure plate and the center plate is set so that the volume of the one member is increased more than the volume of the one member set in response to the drive torque of the engine to be transmitted to the input shaft and the diameter of the clutch disc before the diameter thereof is reduced. Accordingly, the at least one of the members of the pressure plate and the center plate can have a larger heat capacity (heat mass) than that of the one member set before the diameter thereof is reduced. Therefore, the one member is prevented from an overheating due to the generated heat so that the reduction of the friction force can be suppressed.

According to the invention associated with claim 4, in any one of claims 1 through 3, the reduction gear ratio of one of the paired gear wheels which is the lowest speed stage among the plurality of paired gear wheels is set to be increased more than the gear reduction ratio of the paired gear wheels of the first speed stage which is set in response to the drive torque of the engine to be transmitted to the input shaft and the diameter of the clutch disc before the diameter thereof is reduced. Therefore, the engine torque at the time of starting of the vehicle, at which time the heat generation is highly predicted in the clutch disc, the pressure plate and the center plate can be reduced to eventually suppress the generation of heat at the time of clutch engagement operation. By this structure, even an outer diameter of one of the members of the clutch disc, pressure plate and center plate is reduced, the reduced diameter member can be prevented from overheating and reduction of friction force can be suppressed. Further, when the thickness increase according to claim 3 is performed simultaneously with the feature of claim 4, the effect on suppressing the heat generation can be highly improved.

According to the invention associated with claim 5, the transmission is of a dual clutch type, the diameters of two clutch discs, the center plate and two pressure plates can be minimized which leads to the down-sizing and weight reduction can be effectively achieved.

### BRIEF EXPLANATION OF ATTACHED DRAWINGS

Fig. 1 is a skeleton view showing an entire structure of the transmission according to a first embodiment of the invention;
Fig. 2 shows a schematic view of a damper;
Fig. 3 is a skeleton view showing an entire structure of the transmission according to a second embodiment of the invention; and
Fig. 4 is a a skeleton view showing an entire structure of the transmission according to a third embodiment of the invention.

### THE EMBODIMENTS FOR IMPLEMENTING THE INVENTION

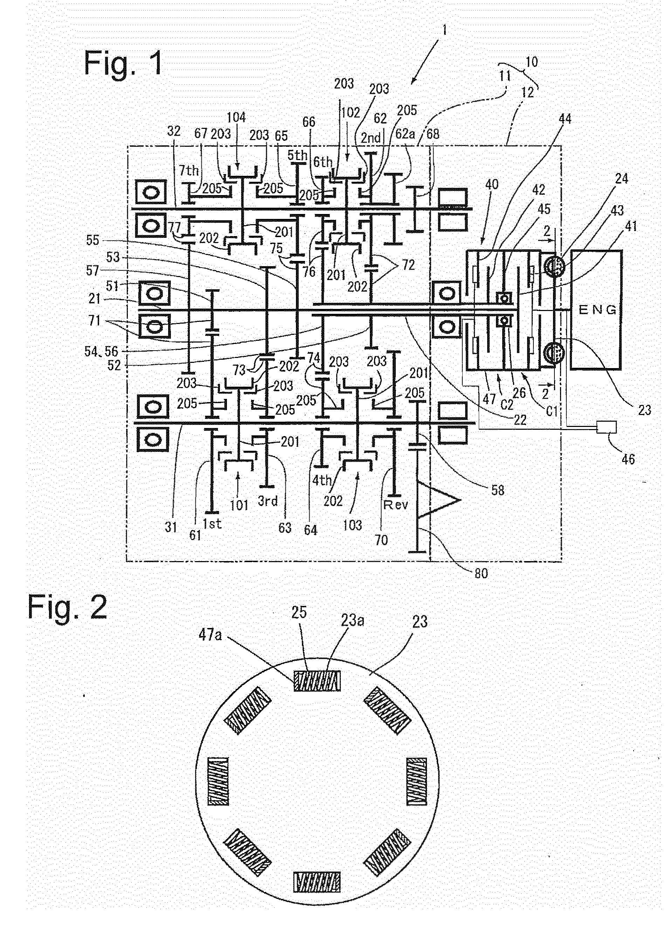

The first embodiment of the transmission will be explained with reference to the Fig. 1 which is a skeleton view of the transmission and Fig. 2 which is a schematic view showing the damper 24. A transmission 1 according to the first embodiment is a transmission for automobile with a transverse-mounted engine. It is noted that the "transverse-mounted engine" means that the output shaft of the engine is provided in parallel with a width direction relative to the automobile. The transmission 1 is, as shown in Fig. 1, a dual clutch type automatic transmission (DCT: Dual Clutch Transmission) connected to the engine ENG generating rotation drive force (drive torque) via a flywheel 23 (corresponding to the rotation member) with seven forward speeds and one reverse speed.

The transmission 1 includes a case 10, a first input shaft 21 and a second input shaft 22 as one shaft (corresponding to the input shaft of the invention), a first output shaft 31 and a second output shaft 32 as the other shaft (corresponding to the output shaft of the invention), a dual clutch 40 (corresponding to the clutch device of the invention), a damper 24, a reverse gear 40 and a plurality of paired gear wheels 71 through 77.

The case 10 includes a transmission case 11 and a clutch housing 12. The transmission case 11 and the clutch housing 12 support the first input shaft 21, the second input shaft 22, the first output shaft 31 and the second output shaft 32 through a plurality of bearings. The drive gears 51 through 57 (corresponding to one wheel gear at drive side of the invention) forming the first through seventh speed stages are fixed to the first and the second input shafts 21 and 22 for unitary rotation therewith. The final reduction drive gears 58 and 68 are fixed to the first and the second output shafts 31 and 32 for unitary rotation therewith, while the driven gears 61 through 67 (corresponding to the other gear wheel at driven side of the invention) of the first through seventh speed stages and reverse gear 70 are relatively rotatably (idly rotatable) supported on the first and the second output shafts 31 and 32. Each drive gear 51 through 57 and each driven gear 61 through 67 corresponds to each other in order from the smaller numeral to the larger numeral and always engaged with each other to form the paired gear wheels 71 through 77 of the first through seventh speed stage. It is noted here that hereinafter the same axial direction with the first and second input shafts and the first and second output shafts is referred to as "input/output axial direction".

The first input shaft 21 is rotatably supported on the transmission case 11 through the bearing. The outer peripheral surface of the first input shaft 21 is provided with a portion for receiving the bearing and a plurality of externally toothed splines. The first speed drive gear 51 and a large diameter third speed drive gear 53 are directly provided on the first input shaft 21. The fifth speed drive gear 55 and the seventh speed drive gear 57 are press fitted to the first input shaft 21 by engaging with the externally toothed splines formed on the outer peripheral surface of the first input shaft 21. The first input shaft 21 is further provided with a connecting portion which is to be connected to a first clutch disc 41 of the dual clutch 40, which will be later explained in detail.

The second input shaft 22 is formed to be of a hollow shaft shape and is rotatably supported on a part of the outer periphery of the first input shaft 21 by means of a plurality of bearings. The second input shaft 22 is also rotatably supported on the clutch housing 12 by means of bearing. This second input shaft 22 is co-centrically arranged with the first input shaft 21 and relatively rotatable therewith. Similarly to the first input shaft 21, the second input shaft 22 is provided with a portion for receiving the bearing and a plurality of externally toothed gear wheels. The second input shaft 22 is provided with a second speed drive gear 52, the fourth speed drive gear 54 and the sixth speed drive gear 56, coaxially arranged on the second input shaft 22. The second input shaft 22 is provided with a connecting portion to be connected to a second clutch 42 of the dual clutch 40.

The first output shaft 31 is disposed in the transmission case 11 and the clutch housing 12 in parallel with the first input shaft 21 and is rotatably supported thereon by means of bearing. Further, the first output shaft 3 is formed with the final speed reduction gear 58 and the portion for receiving the bearing and a plurality of externally toothed splines on the outer peripheral surface thereof. Each hub 201 of the shift clutches 101 and 103 is engaged with the externally toothed splines and press-fitted therein.

The final speed reduction gear 58 is engaged with a ring gear 80 of the differential gear mechanism. The first output shaft 31 is further provided with a supporting portion for allowing idle rotation (relative rotation) of the first speed driven gear 61, the third speed driven gear 63, the fourth speed driven gear 64 and the reverse speed gear 70. The first speed driven gear 61 is always engages with the first speed drive gear 51 formed on the first input shaft 21 to form the first speed paired gear wheels 71 of the lowest speed stage according to the invention.

According to the invention, the reduction gear ratio of the first speed paired gear wheels 71 is set to be larger than the reduction gear ratio of the first speed normally set for the engine ENG with the same displacement (naturally aspirated 1.5 litter displacement) having the same engine drive torque amount. Accordingly, the necessary engine torque at the start of vehicle with the first speed can be reduced. Further, the heat generation of the diameter reduced first and second clutch discs 41 and 42, the first and second pressure plates 43 and 44 and the center plate 45 can be suppressed.

The reduction gear ratio can be set randomly and one example of such setting is made referencing the volume of at least one of the members of the first and the second pressure plates 43 and 44 and the center plate 45 which diameters are to be reduced according to the later explained embodiment of the invention. In detail, the volume is compared between the volume of the pressure plate of a normal size corresponding to a normal size clutch disc set depending on the engine displacement and the engine drive torque and the volumes of the actually used first and the second pressure plates 43 and 44 and then the reduction gear ratio is set so that the reduction gear ratio becomes the inverse ratio of the comparison result. In other words, when the volumes of the first and second used pressure plates 43 and 44 are the same volume as a normal size pressure plate, the reduction gear ratio is not changed, however, when the volumes of the first and second used pressure plates 43 and 44 are smaller than the volume of a normal size pressure plate, the reduction gear ratio is set to be greater by reversing the ratio based on the reduced volume. The invention is not limited to this setting. Even when the volumes of the first and the second pressure plates are larger than the volume of the normal size pressure plate, the reduction gear ratio can be set greater.

The "normal size" of the clutch disc and the pressure plate (and the center plate) will be explained as follows: the diameter (nominal diameter) of the clutch disc generally adapted according to the engine displacement and the engine drive torque of the engine ENG and the diameter and the volume of the pressure plate and the center plate set according to the diameter of the clutch disc and the engine drive torque transmitted to the input shaft are referred to as the "normal size". It is noted that "the normal size (diameter and volume)" hereinafter means the diameter (nominal diameter) of the clutch disc generally adapted in accordance with the engine displacement and the engine drive torque and the size (diameter and volume) of the pressure plate and the center plate corresponding to the diameter of the clutch disc. According to the explanation of the embodiments, the diameter of the clutch disc before decreasing is the "normal size". However, any size of the diameter may be used as the diameter before decreasing, other than the "normal size". For example, regarding to the diameter of actually used clutch disc, such diameter may be used as the diameter before decreasing regardless of how the diameter is set.

The reduction gear ratio can be increased uniformly by the range from 3% to 40% inclusive regardless of the volume of each member. According to the embodiment, the reduction gear ratio of the first speed paired gear wheels 71 is uniformly increased by 10% regardless of the volume of each member.

The necessary engine torque at the start of the automobile with the first speed stage under which a large load is applied on the first clutch disc 41, the first pressure plate 43 and the center plate 45 and the heat is generated due to the repetition of the half-clutch operation can be reduced and the heat generation can be suppressed by the above structure. In other words, even when the disc diameters of the first clutch disc 41, the first pressure plate 43 and the center plate 45 are reduced and each volume, i.e., heat aspirated per unit mass is reduced, the heat accumulation on the first clutch disc 41, the first pressure plate 43 and the center plate 45 can be suppressed effectively to prevent the rising of temperature.

The second output shaft 32 is disposed in the transmission case 11 and the clutch housing 12 in parallel with the first input shaft 21 and is rotatably supported on the transmission case 11 by means of bearing. Further, the second output shaft 32 is provided with the final speed reduction gear 68 and a plurality of externally toothed splines on the outer peripheral surface thereof, as similar to the structure of the first output shaft 31. Each hub 201 of the shift clutches 102 and 104 are engaged with the externally toothed splines of the second output shaft 32 and press-fitted therein. The final speed reduction gear 68 is engaged with the ring gear 80 of the differential gear mechanism. The second output shaft 32 is further provided with a supporting portion for allowing relative rotation (idle rotation) of the second speed driven gear 62, the fifth speed driven gear 65, the sixth speed driven gear 66 and the seventh speed driven gear 67.

The reverse gear 70 is rotatably mounted on the supporting portion of the reverse gear 70 formed on the first output shaft 31. According to the embodiment, the reverse gear 70 is always engaged with a small diameter gear 62a integrally formed with the second speed driven gear 62.

Next, the structure of the first through fourth shift clutches 101 through 104 will be explained. The first shift clutch 101 is disposed between the first speed driven gear 61 and the third speed driven gear 63 in the axial direction relative to the first output shaft 31. The second shift clutch 102 is disposed between the second speed driven gear 62 and the sixth speed driven gear 66 in the axial direction relative to the second output shaft 32. The third shift clutch 103 is disposed between the fourth speed driven gear 64 and the reverse gear 70 in the axial direction relative to the first output shaft 31. Further, the fourth shift clutch 104 is disposed between the fifth speed driven gear 65 and the seventh speed driven gear 67 in the axial direction relative to the second output shaft 32.

The first shift clutch 101 is formed by a clutch hub 201 fixed to the first output shaft 31 with splined connection, a first speed engaging member 205 press-fitted into the first speed driven gear 61, a third speed engaging member 205 press-fitted into the third speed driven gear 63, synchronizer rings 203 interposed between the clutch hub 201 and each of right and left side engaging members 205, 205 and a sleeve 202 engaged in the splines of the clutch hub 201 formed on the outer peripheral surface thereof and movable in an axis line direction. The first shift clutch 101 is a well-known type synchronizing mechanism, each driven gear 61 and 63 being alternately detachably connected to the first input shaft 21.

The sleeve 202 of the first shift clutch 101 is not engaged with any of the engaging member 205, 205 at the neutral position. However, when the sleeve 202 is moved or shifted to a first speed driven gear 61 side by the shift operation device (not shown), the sleeve 202 pushes the chamfer (not shown) of the synchronizer ring 203 at the first speed driven gear 61 side to force the contacting surface (not shown) of the synchronizer ring 203 onto the tapered surface (not shown) of the first speed driven gear 61. Then when the rotations of the synchronizer ring 203 and the first speed driven gear 61 are synchronized, the sleeve 203 is further shifted to the shifting direction to be engaged with the first speed engaging member 205. Thus the first output shaft 31 and the first speed driven gear 61 are connected by synchronization operation to establish the first speed stage. Further, when the sleeve 202 is shifted to the third speed driven gear 63 side by the shift operation device, the rotations of the first output shaft 31 and the third speed driven gear 63 are synchronized and connected to establish the third speed stage.

The structures of the second through fourth shift clutches 102 through 104 are substantially similar to that of the first shift clutch 101 and only the attaching positions are different. The second shift clutch 102 alternatively selects the second speed driven gear 62 and the sixth speed driven gear 66 and connects the selected gear to the second output shaft 32 to establish the second speed stage and the sixth speed stage. The third shift clutch 103 alternatively selects the fourth speed driven gear 64 and the reverse gear 70 and connects the selected gear to the first output shaft 31 to establish the fourth speed stage and the reverse stage. The fourth shift clutch 104 alternatively selects the fifth speed driven gear 65 and the seventh speed driven gear 67 and connects the selected gear to the first output shaft 31 to establish the fifth speed stage and the seventh speed stage.

The clutch housing 12 includes an end surface opposing to the end surface of the transmission case 11 and the opposing end surfaces of the housing 12 and the case 11 are connected by bolt (not shown). This clutch housing 12 supports each shaft by means of the bearing and at the same time accommodates therein the dual clutch 40 (corresponding to the clutch device of the invention).

The dual clutch 40 is of dry type, friction clutch device and includes a rotation shaft coaxial with the first input shaft 21 and the second input shaft 22. The dual clutch 40 is formed by a clutch cover 47, first and second clutch discs 41 and 42 (corresponding to the clutch disc of the invention), first and second pressure plates 43 and 44 (corresponding to the pressure plate of the invention), center plate 45 and clutch actuator 46 (corresponding to the pushing device of the invention). The dual clutch 40 detachably connects the engine ENG with the first input shaft 21 and the second input shaft 22. The first and the second pressure plates 43 and 44 and the center plate 45 respectively correspond to the "one member" of the invention. The first clutch disc 41 which engages the engine ENG with the first input shaft 21 or disengage the engine ENG from the first input shaft 21, the first pressure plate 43 and the center plate 45 form the first clutch C1 and the second clutch disc 42 which engages the engine ENG with the second input shaft 22 or disengage the engine ENG from the second input shaft 22, the second pressure plate 44 and the center plate 45 form the second clutch C2. The first and the second clutches C1 and C2 are independently operated by the operation of the clutch actuator 46.

The clutch cover 47 is formed of a cylindrical shape having a bottom and the rotation axis thereof is coaxially arranged with the first input shaft 21 and the second input shaft 22. The clutch cover 47 is connected to the flywheel 23 which is rotated by the engine ENG and the clutch cover 47 is rotated with the flywheel 23 through the damper 24 (See Fig. 2). The rotation fluctuation of the engine ENG can be absorbed by this damper 24 not to affect to the first input shaft 21 and the second input shaft 22.

The first and the second clutch discs 41 and 42 are of circular disc plate shape. The respective center portions of the first and the second clutch discs 41 and 42 are co-axially spline-engaged with the first and the second input shafts 21 and 22 at the respective connecting portions and the first and the second clutch discs 41 and 42 are restricted from relative rotation with the respective shafts 21 and 22, but allowed to be moved in the axial direction thereof. The first clutch disc 41 is disposed at the right side within the clutch cover 47 as viewed in Fig. 1 and is connected to the connecting portion of the first input shaft 21. The second clutch disc 42 is disposed at the left side within the clutch cover 47 as viewed in Fig. 1 and is connected to the connecting portion formed on the outer peripheral surface of the second input shaft 22.

According to the embodiment, the diameter of the first and the second clutch discs 41 and 42 are set to be the length of 8 inches. Normally the diameter (nominal) of clutch disc is set on every 0.5 inch length according to the engine displacement and the engine drive torque. The nominal diameter of the clutch disc according to the embodiment is appropriately set to be 8.5 inches considering the engine torque transmission amount (the diameter before reducing according to the invention), assuming that the engine displacement is 1.5 litters and the maximum engine torque is 150 Nm

However, the inventors of this application repeated intensely the experimental work and found out that the 8 inch diameter size for the clutch disc of the embodiment (one size (0.5 inch) further being reduced from the diameter before reducing) would be sufficiently transmit the drive torque (150Nm) to the first and the second input shafts 21 and 22 under a predetermined condition (such as increase of pushing pressure of the clutch actuator 46). In this embodiment, the damper 24, which was provided in the inner diameter portion of the clutch disc, is provided between the flywheel 23 and the clutch cover 47 to reduce the size of the diameter of the clutch discs 41 and 42 by 0.5 inch from the nominal diameter 8.5 inches of the clutch discs before reducing.

Thus, by reducing the diameters of the first and the second clutches 41 and 42, the diameter and the weight thereof can be reduced to effectively reduce the inertia force caused by rotation. Accordingly, the workload necessary for connecting each of the paired gear wheels 71 through 77 of each of the synchronizer rings 203 of the shift clutches 102 through 104 with each of the output shafts 31 and 32 can be reduced to improve the engine efficiency by eliminating possible loss generated on the friction surface of the synchronizer ring 203.

It is noted that in this embodiment, the engine specification is assumed that the displacement is 1.5 litters and the maximum drive torque is 150Nm. However, the inventors also tried by other engine which displacement is between 1.3 and 1.5 litters and experimented by these engines with adding the supercharger and found that such engines can be applicable to the invention up to the maximum of 250Nm torque: Accordingly, in this invention, a transmission using the engine which displacement is about 1.3 to 1.5 litters and which maximum drive torque is about 150 to 250Nm. From the experiment result, the nominal diameter of the clutch disc used at the maximum torque of 250Nm could be reduced by three sizes (0.5 by 3) to 8.5 inches from the nominal diameter 10 inches under such condition. Thus the inertia force can be effectively reduced to efficiently transmit the engine drive torque to the transmission.

Next, the first and the second pressure plates 43 and 44 which correspond to the one member according to the invention will be explained. The first and the second pressure plates 43 and 44 are of annular shape and engaged with the center plate 45 at the outer peripheral portion by the plate spring and the rotational movement is restricted but axial movement is allowed. The first pressure plate 43 is disposed at further right side than the position of the first clutch disc 41 within the clutch cover 47 and arranged coaxial with the first and the second input shafts 21 and 22. The first pressure plate 43 is driven by the clutch actuator 46 to be pushed towards or retreated from the first clutch disc 41 in the input/output axial direction. When the pressure plate 43 is pushed towards the first clutch disc 41, the first clutch disc 41 is held between the center plate 45 and the first pressure plate 43. Thus, the first pressure plate 43, first clutch disc 41 and the center plate 45 initially slidably move under the half-clutch state and finally fully engage with each other for unitary rotation and the engine drive torque is transmitted to the first input shaft 21.

The second pressure plate 44 is disposed at further left side than the position of the second clutch disc 42 within the clutch cover 47 and arranged coaxial with the first and the second input shafts 21 and 22. The second pressure plate 44 is driven by the clutch actuator 46 to be pushed towards or retreated from the second clutch disc 42 in the input/output axial direction. When the pressure plate 44 is pushed towards the second clutch disc 42, the second clutch disc 42 is held between the center plate 45 and the second pressure plate 44. Thus, the second pressure plate 44, second clutch disc 42 and the center plate 45 initially slidably move under the half-clutch state and finally fully engage with each other for unitary rotation and the engine drive torque is transmitted to the second input shaft 22.

The diameters of the respective first and second pressure plates 43 and 44 are reduced corresponding to the first and the second clutch discs 41 and 42 having reduced diameters. In other words, the diameter of the pressure plate is reduced by a predetermined amount based on the diameter of the pressure plate before reducing thereof which is set corresponding to the diameter of the clutch disc before reducing. Thus the clutch can be downsized.

The thickness (plate thickness) of the first and second pressure plates 43 and 44 is set so that the volume of the pressure plates 43 and 44 is larger than the volume of a pressure plate normally set based on the diameter of a clutch disc before reducing and an engine drive torque to be transmitted to an input shaft of a transmission. Therefore, the first and second pressure plates 43 and 44 have a larger heat capacity than the heat capacity of the pressure plate which diameter and volume are set by a normally used method. Therefore, overheating of the first and second pressure plates 43 and 44 caused by excess heat generation upon engagement with clutch discs 41 and 42 can be avoided and accordingly, a large decrease of friction force at the engagement surface with the clutch discs 41 and 42 can be prevented thereby.

The center plate 45 as "the other member" is of annular shape and disposed between the first and the second clutch discs 41 and 42 in the input/output axial direction. The center plate 45 is fixed to the inner peripheral surface of the clutch cover 47 at the outer peripheral portion thereof and is rotatable integrally with the clutch cover 47. The inner diameter portion of the center plate 45 is arranged to be coaxial with the second input shaft 22 and relatively rotatable therewith by means of ball bearing 26.

The diameter of the center plate 45 is reduced corresponding to the first and second clutch discs 41 and 42 having the reduced diameters and the first and second pressure plates 43 and 44 having the reduced diameters. Thus the clutch can be downsized. Similar to the thickness of the pressure plates 43 and 44, the thickness (plate thickness) of the center plate 45 is set so that the volume thereof is larger than the volume of a center plate normally set based on the diameter of a clutch disc before reducing and an engine ENG drive torque to be transmitted to an input shaft of a transmission. Therefore, the center plate 45 has a larger heat capacity than the heat capacity of the center plate which diameter and volume are set by a normally used method. Therefore, overheating of the center plate 45 caused by excess heat generation upon engagement with clutch discs 41 and 42 can be avoided and accordingly, a large decrease of friction force at the engagement surface with the clutch discs 41 and 42 can be prevented thereby.

It is noted here that according to the embodiment, the plate thickness of the first and second pressure plates 43 and 44 and the center plate 45 is increased. However, the invention is not limited to this and the thickness of only one of the members can be increased to achieve the effect of the invention.

According to the embodiment, the thickness increase of the members 43, 44 and 45 is set based on increased volumes of each member 43, 44 and 45 exceeding the volumes thereof which are set by a normally used method, adapted to the engine ENG with the displacement of 1.5 litters and maximum engine drive torque of about 150Nm. However, the volumes on which the setting is based may be the volumes which are set by the normally used method. In this case, sufficient effects can be also obtained.

The damper 24 is disposed between the flywheel 23 (rotation member) and the clutch cover 47 of the dual clutch 40 to absorb engine rotation fluctuation. The damper is of a generally used type normally installed between the input shaft of the transmission and the engine ENG. According to the embodiment, as shown in Fig. 2, a plurality of compression springs 25 is disposed in each of the corresponding recessed portions 23a, for example in this embodiment, eight recessed portions are provided at the outer peripheral brim of the flywheel 23 with an equal interval with one another in a peripheral direction. Each one end of the compression spring 25 is engaged with one end of the recessed portion 23a, i.e., engaged with the flywheel 23, and each the other end of the compression spring 25 is engaged with a support arm 47a extending from the clutch cover 47. By this structure the engine rotation fluctuation can be effectively absorbed by the compression springs 25 of the damper 24. Under normal rotation operation the flywheel 23 and the clutch cover 47 are rotated integrally through the compression springs 25. The structure of the damper 24 is not limited to the structure explained above and any type may be applicable and the number of the compression springs 25 is not limited to eight and any number as long as they are provided with an equal interval with one another in the peripheral direction.

The clutch actuator 46 is hydraulically connected to each diaphragm spring 46a provided at each of the first and second pressure plates 43 and 44 through a hydraulic piping. When the hydraulic pressure is not generated, spring force of each diaphragm spring 46a is not applied to the outer peripheral portion and accordingly, the first and the second pressure plates are disengaged from the first and the second clutch discs 41 and 42.

Upon receipt of automobile control instructions, the clutch actuator 46 generates hydraulic pressure by rotating an electric motor (not shown). When such generated hydraulic pressure is applied to each diaphragm spring 46a, the biasing force is generated at the diaphragm spring to push the first and the second pressure plates 43 and 44 towards the first and the second clutch discs 41 and 42. Then the first and the second pressure plates 43 and 44 hold the first and the second clutch discs 41 and 42 between the center plate 45 and the pressure plates 43 and 44, respectively.

Thus, the clutch actuator 46 adjusts the hydraulic pressure to adjust the pushing pressure of the first and the second pressure plates 43 and 44 on the first and the second clutch discs 41 and 42 thereby controlling the engagement force therebetween. It is noted that the relationship between the magnitude of the hydraulic pressure and the pushing pressure is set in advance and is memorized in a ROM (not shown) of the control device. The clutch actuator 46 pushes the first and the second pressure plates 43 and 44 by the predetermined pushing pressure in the input/output axial direction in response to the instructions from the control device.

The pushing pressure is determined by the diameters of the first and the second clutch discs 41 and 42 and the magnitude of engine drive torque to be transmitted to the first and the second input shafts 21 and 22. From the experiment result by the inventors of this application, the diameters (nominal diameters) of the first and the second clutch discs 41 and 42 were reduced to 8.5 inches from the diameters of 8.5 inches (nominal diameters before reducing the diameters). The inventors obtained a proper pushing pressure level for the first and the second clutch discs 41 and 42 with 8 inch diameters. The inventors concluded that the pushing pressure by the clutch actuator 46 to be applied to a clutch disc with 8 inch diameter g is appropriate to increase by +3 to 40%, most preferably, to increase by +10% to the pushing pressure for the clutch disc with 8.5 inch diameter before reducing. Thus, the drive torque of 150Nm of the engine ENG can be effectively transmitted to the first and the second input shafts 21 and 22.

Next, the operation of the structure of the first embodiment of the invention will be explained hereinafter. When the transmission 1 is activated, the control device 8not shown) starts to operate the first and the second clutches C1 and C2 of the dual clutch 40 and each shift clutch 101 through 104 to start speed change operation based on the vehicle running state, such as acceleration opening degree, engine rotation speed, vehicle speed. Under the vehicle non-operated condition after the engine is started, the first and the second clutches C1 and C2 of the dual clutch 40 are in disengaged state and each shift clutch 101 through 104 is in neutral position. Some representing examples, cases that the vehicle is operated from the stopping condition with the first speed stage and that the vehicle speed stage is changed from the first to second stage will be explained hereinafter.

First the operation of the case that the vehicle is started with the first speed stage from the stopping condition will be explained. Under such circumstance, the first and the second clutches C1 and C2 of the dual clutch 40 is disengaged. When the shift lever (not shown) of the transmission 1 is operated to be shifted from the stopped position (parking position) to a forward speed stage. The control device controls to operate the shift operation device (not shown) to drive the first shift clutch which is to be used for shifting to the first and the third speed stages. Then the sleeve 202 of the first shift clutch 101 is slidably moved towards the first speed driven gear 61 and thus moved sleeve 202 pushes the chamfer (not shown) of the synchronizer ring 203 at the first speed driven gear 61 side to have the contact surface (not shown) of the synchronizer ring 203 pushed onto the tapered surface (not shown) of the first speed driven gear 61. Thus, when the rotations of the sleeve 202 and the synchronizer ring 203 and the first speed driven gear 61 are synchronized, the sleeve 202 is further moved in a shifting direction to be engaged with the first speed engaging member 205 to establish the first speed stage. Under such operation, the first input shaft 21 on which the first speed drive gear 51 is supported is not rotated.

When the acceleration opening degree is increased and the engine rotation speed exceeds a predetermined level, the control device controls the clutch actuator 46 of the dual clutch 40 in response to the acceleration opening degree to supply the duel clutch 40 with hydraulic pressure.

When the pushing pressure of the clutch actuator 46 is gradually increased, the spring force of the diaphragm spring 46a increases to push the first pressure plate 43. Then the first pressure plate 43 is engaged with the first clutch disc 41 having the diameter of 8 inches which is smaller than the nominal diameter of 8.5 inches before reducing under half-clutch state by holding the first clutch disc 41 between the center plate 45 and the first pressure plate 43 and then the engagement is completed from the half-clutch engagement for unitary rotation with the first clutch disc 41. Under this state, the clutch actuator 46 generates and applies the pushing pressure by increasing +3 to 40% (preferably +10%) compared to the magnitude of the pushing pressure which is applied to a normal clutch disc having the diameter of 8.5 inches (before reducing the size). Thus the engine torque is still effectively transmitted to the first input shaft 21 from the first clutch C1 even with the first clutch disc 41 having a smaller diameter (8 inches) compared to the clutch disc (having the diameter of 8.5 inches before reducing). The engine drive torque from the first input shaft 21 is then transmitted to the ring gear 80 of the differential gear through the first speed stage paired gear wheel 71, first shift clutch 101, first output shaft 31 and final reduction drive gear 58 to establish the first speed stage and the vehicle is driven with the first speed of the transmission.

The diameter reduced first pressure plate 43 and the also diameter reduced center plate 45 are formed to have a plate thickness so that the volumes of the first pressure plate 43 and the center plate 45 are larger than the volumes of the pressure plate and the center plate with normal diameter (nominal diameter). Accordingly, the first pressure plate 43 and the center plate 45 are provided with the heart capacity which exceeds the heat capacity of the pressure plate and the center plate with normal diameter (nominal diameter) to effectively prevent the overheating and lowering of the friction force due to the generation of excess heat.

Further, the reduction gear ratio of the first speed stage paired gear wheel 71 is set to be larger by 10 % than the reduction gear ratio in the case of using the clutch disc the diameter of which is 8.5 inches before reducing. According to the embodiment, since the volumes of the first pressure plate 43 and the center plate 45 are set to be larger than the normal pressure plate and center plate, the reduction gear ratio may not be increased. However, in order to more effectively perform sped change shifting, the reduction gear ratio at the first speed stage is set to be increased by 10% compared to the normally set first speed gear ratio. Thus the engine torque at the vehicle starting which have high possibility of heat generation can be reduced at the first clutch disc 41, first pressure plate 43 and the center plate 45. The generation of heat at the members 41, 43 and 45 can be effectively suppressed.

Next, the operation of speed change shifting from the first speed stage to the second speed stage will be explained hereinafter. When the acceleration opening degree increases during the vehicle running with the first speed, the speed stage is changed to the second speed. The control device returns the throttle valve (in valve closing direction) to operate the first shift clutch 101 to release the engagement between the first speed paired gear wheel 71 and the output shaft 31. Before releasing this engagement, similar to the operation of the engagement between the first speed paired gear wheel 71 and the output shaft 32, the engagement between the second speed paired gear wheel 72 and the output shaft 32 has been completed. In other words, as similar to the control of the first shift clutch 101, the control device controls the shift operation device to drive the second shift clutch 102 for speed change operation for the second speed stage and the sixth speed stage. Then the sleeve 202 of the second shift clutch 102 is slidably moved towards the second speed driven gear 62 side. At this timing the second output shaft 32 on which the second speed driven gear 62 is relatively rotatably supported, is rotated with a predetermined speed in response to the rotation of the vehicle wheel corresponding the vehicle speed under running. By sliding the sleeve 202 the second output shaft 32 and the second speed driven gear 62 are slidably moved and the rotation thereof is gradually synchronized to be engaged by the synchronizer ring 203 thereby to establish the second speed stage. As explained above, the DCT (dual clutch type transmission) establishes the second speed stage before releasing the first speed stage.

Then the control device operates the clutch actuator 46 of the dual clutch 40 to decrease the pushing pressure of the first pressure plate 43. Thus the control device releases the engagement of the first clutch C1 by releasing the engagement between the first pressure plate 43 and the first clutch disc 41. At the same time the control device operates the clutch actuator 46 to push the second pressure plate 44 with a predetermined pushing pressure. Through the half-clutch operation, the second clutch disc 42 having the diameter of 8 inches which is smaller than the normal clutch disc diameter (nominal diameter) before reducing the size) is held between the second pressure plate 44 with the smaller diameter and the center plate 45 with the smaller diameter thereby to establish engagement of the second clutch C2 for unitary rotation.

Since the diameter of the second clutch disc 42 is reduced in size compared to a normal clutch disc (the clutch disc before the diameter thereof being reduced), no large inertia force which may interfere the rotation is generated. Accordingly, a large load on the friction surface of the synchronizer ring 203 would not be generated. Thus the friction or sliding on the friction surface of the synchronizer ring 203 and the loss of the engine torque can be suppressed.

Further, the pushing pressure of the clutch actuator 46 is increased by +3 to +40% (in this embodiment, preferably set to +10%) from the clutch disc having the nominal diameter of 8.5 inches before reducing. Thus, the engine ENG drive torque is effectively transmitted to the second input shaft 22 from the second clutch C2 which second clutch disc 42 has a smaller diameter than the diameter of the clutch disc before reducing and the drive torque is transmitted to the ring gear 80 of the differential gear from the input shaft 22 through the second speed paired gear wheel 72, the second shift clutch 102, the second output shaft 32 and the final reduction drive gear 68. Therefore the vehicle changes the speed stage from the first to the second and runs with the second speed of the transmission.

Even the engine drive torque is the maximum (150Nm), the pushing pressure of the clutch actuator 46 is increased by +3 to 40% (in this embodiment, preferably set to +10%) from the clutch disc having the nominal diameter before reducing. Thus, the engine ENG drive torque is effectively transmitted to the second input shaft 22 from the second clutch C2.

The thickness (plate thickness) of the second pressure plate 44 is set so that the volume of the pressure plate is larger than the volume of a pressure plate normally set.. Therefore, the second pressure plate 44 has a larger heat capacity than the heat capacity of the pressure plate which diameter and volume are set by a normally used method. Therefore, overheating of the second pressure plate 44 caused by excess heat generation can be avoided and accordingly, a large decrease of friction force can be prevented thereby. As to the center plate 45 having a larger heat capacity than a normal center plate before reducing the diameter thereof, the explanation has been made in the operation of the first speed change and detail explanation here will be omitted.

Similarly, the speed change operation will be made under the control of the control device wherein based on the vehicle running state in the third through seventh speeds by the operation of each shift operation device, an appropriate speed stage is selected and the first and the second clutches C1 and C2 are alternatively quickly switched over to have the vehicle run with the speed stage suitable for the current vehicle running state.

Under the vehicle is stopped with the engine ENG being ON, when the shift lever (not shown) is shifted to the reverse position, the control device detects the shifting operation and similar to the other shifting explained above, the control device operates the third shift clutch 103 for changing the fourth speed and the reverse speed stages. Then the shift operation device of the third shift clutch 103 operates the sleeve 203 to slide in the reverse gear 70 direction. The rotations of the sleeve 202 and the reverse gear 70 are synchronized by the synchronizer ring 203 to establish the reverse speed stage by the synchronized rotation of the sleeve 202 and the reverse gear 70. The reverse gear 70 is always engaged with a small diameter gear 62a formed integrally with the second speed driven gear 62 of the speed change stage. Thus the drive torque of the engine ENG is transmitted to the ring gear 80 of the differential gear from the second clutch C2 through the second input shaft 22, the second speed paired gear wheel 72 (the second speed drive gear 52 and the second speed driven gear 62), the small diameter gear 62a, the reverse gear 70, the third shift clutch 103, the first output shaft 31 and the final reduction drive gear 68. Therefore the vehicle starts to be moved in reverse direction.

According to the embodiment, the diameters of the first and the second pressure plates 43 and 44 and the center plate 45 are reduced to be adapted to the first and the second clutch discs 41 and 42 having the reduced diameters of 8 inches which are reduced from the nominal diameters of 8.5 inches before reducing. Accordingly, in order to suppress the heat generation, the thickness (plate thickness) of the first and second pressure plates 43 and 44 and the center plate 45 is set so that the volume of the pressure plates 43 and 44 and the center plate is larger than the volume of a pressure plate and a center plate normally set. At the same time, the reduction gear ratio of the first speed stage paired gear wheel 71 of the lowest speed stage (the first speed stage) to be larger than the ratio normally set for the first speed stage. However, it may be possible to independently set the increasing of the thickness of the members and the increase of the reduction gear ratio. Even under such independent setting, the effect of the invention will be achieved accordingly.

According to the embodiment, the engine ENG to be applied is exampled to be an engine with naturally aspired type 1.5 litter displacements and maximum engine torque of 150Nm. However, other engine which displacement is between 1.3 and 1.5 litters with adding the supercharger with up to the maximum of 250Nm torque can be applicable to the invention. In such case, the pushing pressure of the clutch actuator 46 for pushing the first and the second clutch discs 41 and 42 through the first and the second pressure plates 43and 44 may be increased by +3 to +40% by +3 to +40% from the clutch disc having the nominal diameter before reducing.

Further, according to the embodiment, one gear wheel 51 through 57 of the drive side is fixed to the first and the second input shafts 21 and 22 and the other gear wheel 61 through 67 of the driven side is rotatably supported on the first and the second output shafts 31 and 32. However, the invention is not limited to this structure and the following structure that the one gear wheel 51 through 57 of the drive side is rotatably supported on the first and the second input shafts 21 and 22 and that the other gear wheel 61 through 67 of the driven side is fixed to the first and the second output shafts 31 and 32 may be used.

Still further, the diameters of all members of the first and the second clutch discs 41 and 42, the first and the second pressure plates 43 and 44 and the center plate 45 are reduced. However, only the diameters of the first and the second clutch discs 41 and 42 may be reduced which can also effectively reduce the inertia rotation against the first and the second input shafts 21 and 22.

As explained, according to the first embodiment of the invention, the damper 24 is provided between the flywheel 23 (rotation member) and the clutch cover 47. Accordingly it is not necessary to provide a damper at an inner diameter portion of the first and the second clutch discs 41 and 42 to enable the diameter of the clutch discs to be reduced from the nominal diameter of 8.5 inches before reducing to the reduced diameter of 8.0 inches. The reduction of the diameters of the clutch discs may reduce the transmitting amount of the engine drive torque to the first and the second input shafts 21 and 22. However, such reduction of the torque transmitting amount can be compensated for by increasing the pushing pressure of the clutch actuator (pushing device) set based on the nominal diameter (8.5 inches) of the first and the second clutch discs 41 and 42 before reducing. This can decrease the rotation inertia of the first and the second clutch discs 41 and 42 to reduce the workload of the synchronizer ring 203. Accordingly, the size of the synchronizer ring can be reduced and simplified leading to the improvement in engine efficiency and downsizing of the transmission 1.

Further, according to the first embodiment, the pushing pressure of the clutch actuator 46 (pushing device) pushing against the first and the second clutch discs 41 and 42 can be increased by +3 to 40% with respect to the pushing pressure normally set based on the clutch disc having the nominal diameter of 8.5 inches before reducing. Accordingly, a normally used clutch actuator can be used as it is without change not to increase the cost thereby.

According to the first embodiment of the invention, the thickness of at least one of the members of the first and the second pressure plates 43 and 44 and the center plate 45 is set so that the volume of the one member is increased more than the volume of the one member normally set in response to the drive torque of the engine to be transmitted to the first and the second input shafts 21 and 22 and the diameter of the clutch disc before the diameter thereof is reduced. Accordingly, the at least one of the members of the pressure plate and the center plate can have a larger heat capacity (heat mass) than that of the one member set before the diameter thereof is reduced. Therefore, the one member is prevented from an overheating due to the generated heat so that the reduction of the friction force can be suppressed.

According to the first embodiment of the invention, the reduction gear ratio of one 71 of the plurality of paired gear wheels 71 through 77 which is the lowest speed stage among the plurality of paired gear wheels is set to be increased more than the gear reduction ratio of the paired gear wheel of the first speed stage which is set in response to the drive torque of the engine and the diameter of the clutch disc before the diameter thereof is reduced. Therefore, the engine torque at the time of starting of the vehicle, at which time the heat generation is highly predicted in the first and the second clutch discs 41 and 42, the first and the second pressure plates 43 and 44 and the center plate 45 can be reduced to eventually suppress the generation of heat at the time of clutch engagement operation of the first and the second clutches C1 and C2. By this structure, even an outer diameter of one of the members of the clutch discs 41 and 42, pressure plates 43 and 44 and center plate 45 is reduced, the reduced diameter member can be prevented from overheating and reduction of friction force can be suppressed. Further, when the thickness increase explained above is performed simultaneously, the effect on suppressing the heat generation can be highly improved

According to the first embodiment of the invention, the transmission is of a dual clutch type (DCT), the diameters of two pressure plates, first and second pressure plates 43 and 44, the center plate 45 and two clutch discs, first and the second clutch discs 41 and 42 can be minimized which leads to the down-sizing and weight reduction can be effectively achieved.

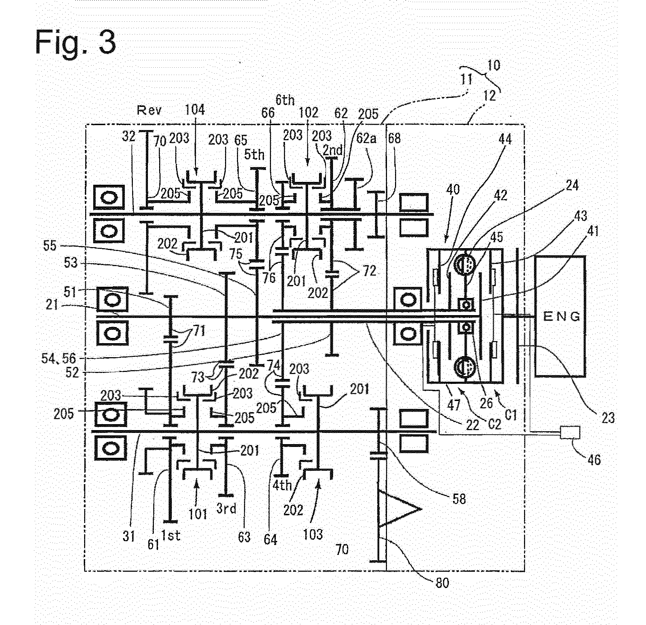

As a second embodiment of the invention, as shown in Fig. 3, the damper 24 may be provided between the clutch cover 47 and the center plate 45 of the dual clutch 40. The effect similar to the first embodiment can be achieved as well. The transmission 1 in Fig. 3 is a DCT of six forward speeds and one reverse speed and the reverse paired gear wheel is provided at the position of the seventh speed paired gear wheel of the first embodiment shown in Fig. 1. The reference numerals and symbols same and similar to those in Fig. 1 are referenced and the detail explanation thereof will be omitted.

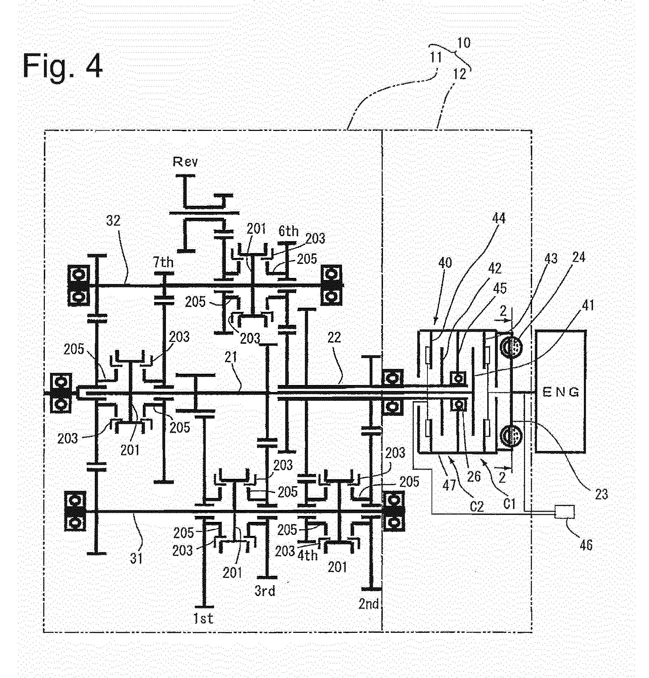

As a third embodiment of the invention, the engine shown in Fig. 4 is a longitudinal engine arranged in a longitudinal direction. In this embodiment, the similar to the first embodiment, the damper 24 may be provided between the clutch cover 47 and the flywheel 23. The effect similar to the first embodiment can be obtained. The reference numerals and symbols same and similar to those in Fig. 1 are referenced and the detail explanation thereof will be omitted.

According to the three embodiments (first through third) above, the clutch device (clutch actuator 46) is shown as a hydraulically actuated type, but any other type, such as electrically operated motor can be applicable.

Further, according to the three above embodiments, the DCT automated transmission is used to implement the invention, but the invention is not limited to this and any manual transmission (AMT) will be used for this invention, as long as a clutch thereof is automatically operated. Further, the invention is applicable to a clutch portion of a normal automatic transmission with a torque converter.

### INDUSTRIAL APPLICABILITY

The transmission having a clutch device which improves the engine efficiency by decreasing the work amount of the synchronizer ring associated with the present invention can be applicable to various vehicles with speed change mechanism.

### EXPLANATION OF REFERENCE NUMERALS

In the drawings:
1: transmission, 10: case, 11: transmission case, 12: clutch housing, 21: input shaft (first input shaft), 22: input shaft (second input shaft), 24: damper, 31: output shaft (first output shaft), 32: output shaft (second output shaft), 40: dual clutch, 41: first clutch disc, 42: second clutch disc, 43: first pressure plate, 44: second pressure plate, 45: center plate, 46: clutch device (clutch actuator), 47: clutch cover, 51 to 57: one gear wheel at drive side, 58, 68: final reduction drive gear, 61 to 67: the other gear wheel at driven side, 62a: small diameter gear, 70: reverse gear, 71 to 77: paired gear wheel, 80: ring gear.

## Claims

1. A transmission comprising:
a case;
an input shaft and an output shaft which are supported in the case in an axial direction;
a clutch device for engaging an engine with or disengaging the engine from the input shaft, the clutch device including a clutch cover rotatably connected to a rotation member which is rotated by the engine and rotated by the rotation member, a clutch disc supported on the input shaft and a rotational movement thereof being restricted, but an axial movement thereof relative to the input shaft being allowed, a pressure plate supported on the clutch disc and a rotational movement thereof being restricted but an axial movement thereof relative to the input shaft being allowed for pushing upon the clutch disc, a center plate provided at the clutch cover and a pushing device pushing the pressure plate to push upon the clutch disc together with the center plate;
a damper provided between the rotation member and the clutch cover or between the clutch cover and the center plate for absorbing an engine rotation fluctuation; and
a plurality of mutually engaged paired gear wheels, one of the paired gear wheels of the plurality of paired gear wheels being fixed to one of the input shaft and the output shaft and the other of the paired gear wheels of the plurality of paired gear wheels being rotatably connected to the other of the input shaft and the output shaft, wherein the other of the input shaft and the output shaft is rotatably connected by a synchronizer ring of a shift clutch, **characterized in that**
a pushing pressure by the pushing device for pushing the clutch disc which diameter is reduced is set to be greater than a pushing pressure based on the clutch disc having a diameter before the clutch disc is reduced.

2. The transmission according to claim 1 is characterized that the magnitude of the pushing pressure to be increased is in the range from +3 to +40% of the pushing pressure set based on the clutch disc having the diameter before the clutch disc is reduced.

3. The transmission according to claim 1 or 2 is **characterized in that** a thickness of at least one of the members of the pressure plate and the center plate is set so that a volume of the one member is increased more than a volume of the one member set based on a drive torque of the engine to be transmitted to the input shaft and the diameter of the clutch disc before the diameter thereof is reduced.

4. The transmission according to claim any one of claims 1 through 3 **characterized in that** a reduction gear ratio of one of the paired gear wheels which is the lowest speed stage among the plurality of paired gear wheels is set to be increased more than a gear reduction ratio of the paired gear wheel of the first speed stage which is set based on the drive torque of the engine to be transmitted to the input shaft and the diameter of the clutch disc before the diameter thereof is reduced.

5. The transmission according to claim any one of claims 1 through 4, **characterized in that** the input shaft includes a first input shaft and a second input shaft coaxially and rotatably supported on the case,
the output shaft includes a first output shaft and a second output shaft rotatably supported on the case in parallel with the first input shaft and the second input shaft, respectively,
the one of the paired gear wheels at each drive side among the plurality of paired gear wheels is fixed to the first input shaft and the second input shaft and the other of the paired gear wheels at each driven side among the plurality of the paired gear wheels is supported on the first output shaft and the second output shaft,
the pressure plate of the clutch device includes a first pressure plate and a second pressure plate, and the clutch disc includes a first clutch disc held between the first pressure plate and the center plate and a second clutch disc held between the second pressure plate and the center plate.
